# EUROPEAN PATENT APPLICATION

(11) **EP 4 838 858 A2**
(43) Date of publication of application: **11.11.2026**
(21) Application number: 26207784.5
(22) Date of filing: 30.06.2023
(51) Int. Cl.: H04L 45/64

(54) **INFORMATION PROCESSING SYSTEM, INFORMATION PROCESSING METHOD, AND INFORMATION PROCESSING PROGRAM**

(30) Priority: 03.03.2023 JP 2023033210
(62) Document number(s) of the earlier application(s) in accordance with Art. 76 EPC: 23926372.6 / 4 679 782
(71) Applicant: NTT Docomo Business, Inc., Tokyo 100-8019 (JP)
(72) Inventor: TAKATSU, Takeshi, Tokyo, 100-8019 (JP); HATADA, Mitsuhiro, Tokyo, 100-8019 (JP)
(74) Representative: Hoffmann Eitle

(57) **Abstract**

An information processing system (1) is an information processing system including: an upper NW device (100) being a device constituting an overlay network; and a lower NW device (200) being a device constituting an underlay network. In this system, the upper NW device (100) detects unauthorized communication, and notifies the lower NW device (200) of information related to the unauthorized communication detected. The lower NW device (200) acquires information related to communication of a terminal connected to the lower NW device (200), determines an inconsistency level among a plurality of pieces of flow data in the underlay network having the same connection destination address as the information related to unauthorized communication notification of which is provided, and blocks the information related to unauthorized communication notification of which is provided as unauthorized communication in accordance with the inconsistency level determined.

## Description

### [Technical Field]

The present invention relates to an information processing system, an information processing method, and an information processing program.

### [Background Art]

Conventionally, there are security countermeasure techniques in end-point terminals such as personal computers and servers. For example, there are related techniques of detecting suspicious communication or behavior at an end point by using Endpoint Detection and Response (EDR).

### [Citation List]

### [Non Patent Citation]

Non Patent Literature 1: ICT Business Online (currently docomo business Watch): The IT trend terms EDR [searched on June 20, 2023], Internet (https://www.ntt.com/bizon/glossary/e-e/edr.html)

### [Summary of Invention]

### [Technical Problem]

The related technique includes problems in terms of cost and security. For example, EDR needs to be deployed on each terminal, requiring high cost. In addition, terminals such as office automation (OA) devices and Internet of Things (IoT) terminals on which EDR cannot be deployed have not undergone the measure, and thus, security risk remains. Furthermore, there are cases where a normally functioning terminal is erroneously detected as an unauthorized terminal, or a normal communication destination from a normally functioning terminal is erroneously detected as an unauthorized communication destination.

The present invention has been made in view of the above, and aims to provide an information processing system, an information processing method, and an information processing program for achieving improvement in security and reduction in cost.

### [Solution to Problem]

The object of the invention is solved by the subject matter of the independent claims. Advantageous embodiments are solved by the dependent claims. An information processing system according to an example is an information processing system including: an upper network (NW) device being a device constituting an overlay network; and a lower NW device being a device constituting an underlay network, wherein the upper NW device includes: a detector configured to detect unauthorized communication; and a notifier configured to notify the lower NW device of information related to the unauthorized communication detected by the detector, and the lower NW device includes: an acquirer configured to acquire information related to communication of a terminal connected to the lower NW device; a determiner configured to determine an inconsistency level among a plurality of pieces of flow data in the underlay network having the same connection destination address as the information related to unauthorized communication notification of which is provided by the notifier; and a blocker configured to block the information related to unauthorized communication notification of which is provided by the notifier as unauthorized communication in accordance with the inconsistency level determined by the determiner.

### [Advantageous Effects of Invention]

According to the present invention, it is possible to achieve improvement in security and reduction in cost.

### [Brief Description of Drawings]

FIG. 1 is a diagram for illustrating a related technique.
FIG. 2 is a diagram for illustrating an example of a configuration of an information processing system according to an embodiment.
FIG. 3 is a diagram for illustrating an example of a configuration of an upper NW device according to the embodiment.
FIG. 4 is a diagram for illustrating an example of a configuration of a lower NW device according to the embodiment.
FIG. 5 is a diagram for illustrating an outline of processing performed by the information processing system according to the embodiment.
FIG. 6 is a diagram for illustrating an example of detection processing and determination processing performed by the information processing system according to the embodiment.
FIG. 7 is a diagram for illustrating an example of detection processing and determination processing performed by the information processing system according to the embodiment.
FIG. 8 is a diagram for illustrating an example of detection processing and determination processing performed by the information processing system according to the embodiment.
FIG. 9 is a diagram for illustrating an example of blocking processing performed by the information processing system according to the embodiment.
FIG. 10 is a diagram for illustrating an example of the blocking processing performed by the information processing system according to the embodiment.
FIG. 11 is a flowchart for illustrating an example of a flow of processing performed by the information processing system according to the embodiment.
FIG. 12 is a diagram illustrating an example of a computer that executes an information processing program.

### [Embodiments for Carrying Out the Invention]

Hereinafter, embodiments of an information processing system, an information processing method, and an information processing program according to the present application will be described in detail with reference to the drawings. Note that the present invention is not limited by the embodiment. In the description of the drawings, the same portions are denoted by the same reference numerals, and redundant description is omitted.

### [Related technique]

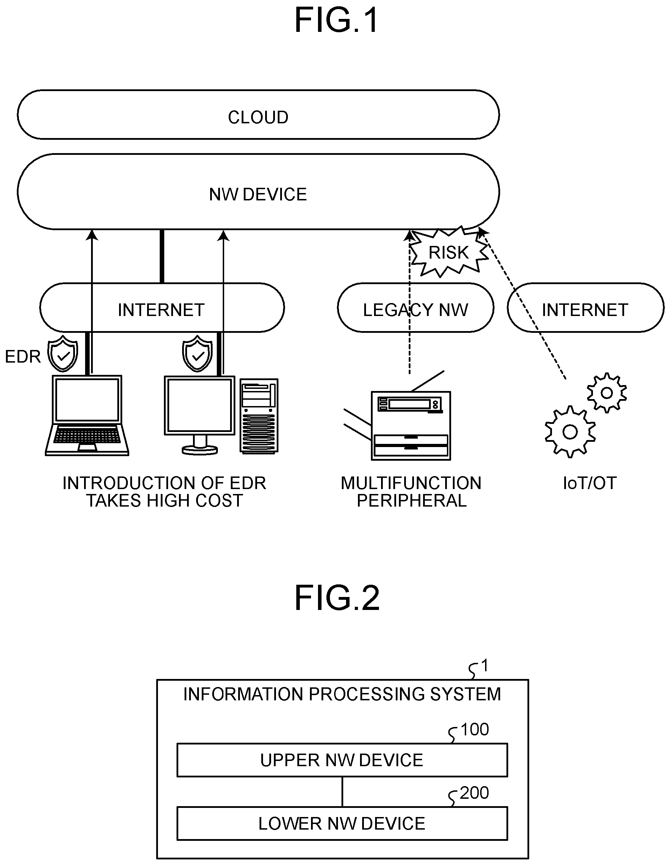

First, a related technique will be described with reference to FIG. 1. FIG. 1 is a diagram for illustrating a related technique.

In the following, a device constituting an overlay network will be denoted as an upper NW device, while a device constituting an underlay network will be denoted as a lower NW device. Here, the upper NW device refers to, for example, a cloud proxy server or Unified Threat Management (UTM) equipment. The lower NW device refers to, for example, a network device such as Deep Packet Inspection (DPI) equipment, a router, and a switch.

In the conventional security countermeasures, networks are divided into a reliable "inside" and an unreliable "outside", and countermeasures are taken at the boundary. An example of the inside network is a data center connected by an in-house local area network (LAN) or a virtual private network (VPN), and an example of the outside network is the Internet. For example, as a countermeasure taken at the boundary, security equipment such as a firewall, a proxy, or an Intrusion Detection System (IDS)/Intrusion Prevention System (IPS) is installed at the boundary to monitor and control the communication, thereby blocking a cyberattack from the outside.

Such prior security measures assume that data and systems to be protected are inside the network. However, with the spread of the cloud, it is not unusual that there is a target to be protected on the Internet on the outside. In this manner, the targets to be protected are scattered in various locations to blur the boundary, making it difficult to take sufficient measures with a conventional mindset.

In view of this circumstance, the concept of zero trust is spreading. In the zero trust security service, various security countermeasures are taken on the assumption that all communications are not to be trusted. Specific examples of this include enhancement of user authentication by encryption of a communication path regardless of the inside and outside of the network, use of multi-factor authentication, and the like, and integrated log monitoring of the network and various devices connected to the network. A large number of security solutions for implementing the zero trust have already emerged. For example, there has been provided a solution such as EDR that enables quick detection and handling of a cyberattack by monitoring a client device and analyzing a log.

As a security countermeasure technique in end-point terminals such as personal computers and servers, there is a related technique of detecting suspicious communication and behavior at the end point terminal by EDR.

The related technique, however, includes problems in terms of cost and security. For example, EDR needs to be deployed on each terminal, requiring high cost. In addition, countermeasures are not taken in OA devices and IoT terminals in which EDR cannot be deployed, and a security risk remains. Furthermore, a normally functioning terminal is erroneously detected as an unauthorized terminal in some cases.

In view of this, an information processing system 1 according to the present embodiment described below is an information processing system including: an upper NW device 100 being a device constituting an overlay network; and a lower NW device 200 being a device constituting an underlay network. In this system, the upper NW device 100 detects unauthorized communication, and notifies the lower NW device 200 of information related to the unauthorized communication detected. The lower NW device 200 acquires information related to communication of a terminal connected to the lower NW device 200, determines an inconsistency level among a plurality of pieces of flow data in the underlay network having the same connection destination address as the information related to the unauthorized communication notification of which is provided, and blocks the information related to unauthorized communication notification of which is provided as unauthorized communication in accordance with the inconsistency level determined.

With such an information processing system, effects such as cost reduction and security enhancement can be obtained. In addition, by blocking communication from a terminal that performs unauthorized communication, communication is controlled in units of devices without blocking the entire NW, thereby achieving robust security while ensuring the availability of the NW.

Furthermore, the information processing system 1 provides a zero trust security service unique to a provider (carrier). The zero trust security uses a configuration in which the underlay NW and the overlay NW cooperate to perform protection in an Information and Communication Technology (ICT) environment with increased complexity and cyber risk by new ways of working such as working remotely and new business expansion by utilization of IoT and the like.

The information processing system 1 provides a secure Network as a Service (NaaS) type ICT service closely linking the function of the overlay NW and the function of the underlay NW. A company that receives the service of the information processing system 1 can easily start, revise, and cancel the service of the information processing system 1 immediately by applying from a management portal site without spending a cost for Information Technology (IT) vendor outsourcing or spending a cost for NW design, making it possible to reduce operational cost taken from design to application.

Regarding the information processing system 1, the overlay NW and the underlay NW are provided by the same provider. In addition, the user who uses the information processing system 1 can perform flexible use of the system, for example, using only the overlay NW of this system and using the underlay NW of another company.

### [Configuration of information processing system]

Next, a configuration of the information processing system 1 will be described with reference to FIG. 2. As illustrated in FIG. 2, the information processing system 1 includes an upper NW device 100 and a lower NW device 200. Each of these devices will be described below. In the information processing system 1, the number of the upper NW devices 100 and the number of the lower NW devices 200 are not limited to one, and each device may be provided in plurality.

The upper NW device 100 is a device that controls an upper network of the information processing system 1. The upper NW device 100 detects unauthorized communication and notifies the lower NW device 200 of the detected result.

The lower NW device 200 is a device that controls a lower network of the information processing system 1. The lower NW device 200 determines whether the information regarding the unauthorized communication notification of which is provided from the upper NW device 100 is erroneous detection, and blocks the unauthorized communication when the information is not erroneous detection. In contrast, when the information is erroneous detection, the device deletes the information related to unauthorized communication, which has been used for detection.

### [Configuration of upper NW device]

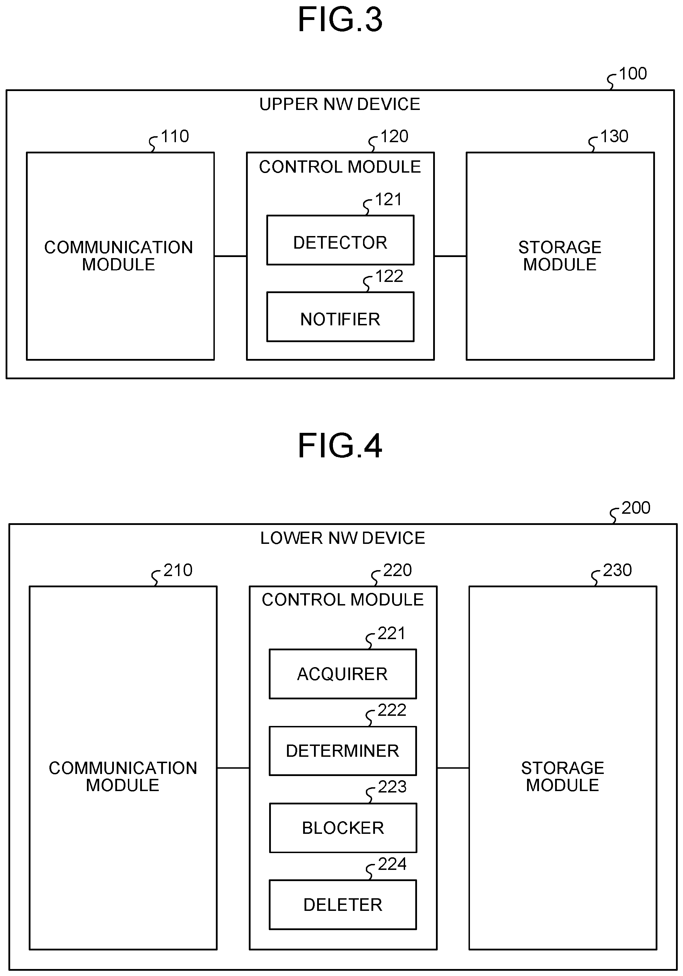

Next, a configuration of the upper NW device 100 will be described with reference to FIG. 3. As illustrated in FIG. 3, the upper NW device 100 includes a communication module 110, a control module 120, and a storage module 130. Note that these modules may be held by a plurality of devices in a distributed manner. Hereinafter, processing of these modules will be described.

The communication module 110 is implemented by a Network Interface Card (NIC) or the like, and enables communication between the control module 120 and an external device via a telecommunications link such as a Local Area Network (LAN) or the Internet. For example, the communication module 110 enables communication between the external device and the control module 120.

The storage module 130 is implemented by a semiconductor memory element such as Random Access Memory (RAM) or flash memory, or a storage device such as a hard disk or an optical disk. The information stored in the storage module 130 includes, for example, terminal information managed by the upper NW device 100, terminal information managed by the lower NW device 200, information related to unauthorized communication used for detection, information related to unauthorized communication used for determination of erroneous detection, information regarding detected unauthorized communication, and other information necessary for blocking unauthorized communication. Here, the information related to unauthorized communication used for detection includes information such as terminal information of a communication destination of unauthorized communication and an IP address of a communication destination of unauthorized communication. The information related to unauthorized communication used for determination of erroneous detection includes information such as content of communication involving the lower NW device 200 and cyberattack information. Note that the information stored in the storage module 130 is not limited to the example described above.

Here, the information related to unauthorized communication used for determination of erroneous detection refers to a plurality of pieces of flow data in the underlay network having the same connection destination address as the unauthorized communication detected in the overlay network.

The control module 120 is implemented by using a Central Processing Unit (CPU), a Network Processor (NP), a Field Programmable Gate Array (FPGA), or the like, and executes a processing program stored in the memory. As illustrated in FIG. 3, the control module 120 includes a detector 121 and a notifier 122. Hereinafter, each part included in the control module 120 will be described.

The detector 121 detects unauthorized communication. For example, the detector 121 detects unauthorized communication by the security function. For example, the detector 121 detects unauthorized communication by the UTM security function.

For example, when an IP address of a connection destination of a packet matches the IP address of the unauthorized communication stored in advance in the storage module 130, the detector 121 detects the communication as an unauthorized communication and specifies the IP address of the connection destination as the IP address of the unauthorized communication destination. Methods of detecting unauthorized communications that may be used by the detector 121 include, not only an IP address, but also a communication date/time, behaviors of packets observed at the time of an attack such as a Distributed Denial of Service (DDoS) attack, a SYN flooding attack, or a buffer overflow attack, and any other existing detection method.

The notifier 122 notifies the lower NW device 200 of the information regarding the unauthorized communication detected by the detector 121. For example, as information regarding unauthorized communication detected by the detector 121, the notifier 122 notifies the lower NW device 200 of information such as a detection date/time, a detection type, a connection destination IP address/port, and a connection source IP address/port of the unauthorized communication.

For example, a notifier 122 specifies a communication destination of the unauthorized communication using the information regarding the unauthorized communication detected by the detector 121, and then notifies the lower NW device 200 of the specified communication destination of the unauthorized communication. The "connection destination IP address/port" includes one or both of the connection destination IP address and the connection destination port. The "connection source IP address/port" includes one or both of the connection source IP address and the connection source port.

### [Configuration of lower NW device]

Next, a configuration of the lower NW device 200 will be described with reference to FIG. 4. As illustrated in FIG. 4, the lower NW device 200 includes a communication module 210, a control module 220, and a storage module 230. Note that these modules may be held by a plurality of devices in a distributed manner. Hereinafter, processing of these modules will be described.

The communication module 210 is implemented by an NIC or the like, and enables communication between the control module 220 and an external device via a telecommunications link such as a LAN or the Internet. For example, the communication module 210 enables communication between the external device and the control module 220.

The storage module 230 is implemented by a semiconductor memory element such as RAM or flash memory, or a storage device such as a hard disk or an optical disk. The information stored in the storage module 230 includes, for example, terminal information managed by the upper NW device 100, terminal information managed by the lower NW device 200, information related to the communication of the terminal connected to the lower NW device 200, information related to unauthorized communication used for detection, information related to unauthorized communication used for determination of erroneous detection, information regarding detected unauthorized communication, and other information necessary for blocking unauthorized communication. Here, the information related to unauthorized communication used for detection includes information such as terminal information of a communication destination of unauthorized communication and an IP address of a communication destination of unauthorized communication. The information related to unauthorized communication used for determination of erroneous detection includes information such as content of communication involving the lower NW device 200 and cyberattack information. Note that the information stored in the storage module 230 is not limited to the example described above.

The control module 220 is implemented by using a CPU, an NP, an FPGA, or the like, and executes a processing program stored in the memory. As illustrated in FIG. 4, the control module 220 includes an acquirer 221, a determiner 222, a blocker 223, and a deleter 224. Hereinafter, each part included in the control module 220 will be described.

The acquirer 221 acquires information related to communication of a terminal connected to the lower NW device 200. For example, the acquirer 221 acquires information related to communication of OA equipment or IoT equipment connected to the lower NW device 200.

The determiner 222 determines an inconsistency level among a plurality of pieces of flow data in the underlay network having the same connection destination address as the information regarding the unauthorized communication notification of which is provided by the notifier 122. For example, the determiner 222 calculates an inconsistency level among a plurality of pieces of flow data in the underlay network in which the connection destination address is the same as that of the information regarding the unauthorized communication notification of which is provided by the notifier 122, and then determines whether the inconsistency level is a predetermined threshold or more. When the inconsistency level is the predetermined threshold or more, the determiner 222 determines that the information is obtained as erroneous detection. Note that the information regarding the flow data may be data acquired from each piece of communication equipment in the underlay NW or may be data stored in an external device.

Here, a specific example of a method of calculating the inconsistency level by the determiner 222 will be described. For example, the determiner 222 acquires flow data having the same connection destination IP address included in the information regarding unauthorized communication notification of which is provided by the notifier 122.

Subsequently, the determiner 222 calculates the inconsistency level based on any one or a plurality of the communication date/time, the connection destination port number, the communication protocol, and the number of bytes transferred between pieces of flow data. For example, in a case where the inconsistency level is calculated based on the connection destination port number, the communication protocol, and the number of bytes transferred, the determiner 222 determines, for all the acquired flow data, whether a ratio of records in which no total matching is achieved in the connection destination port number, the communication protocol, and the number of bytes transferred, is a predetermined threshold (for example, 50%) or more. In a case where the ratio is the predetermined threshold or more, the determiner 222 determines that the detection result in the overlay network is obtained as erroneous detection. Note that the method of calculating the inconsistency level is not limited to this, and the determiner 222 may count the number of unmatched records instead of the ratio of unmatched records and may determine whether the number of unmatched records is a predetermined threshold or more. Here, the information match may not be an exact match but may be a partial match.

In addition, for example, in a case where the inconsistency level is calculated by also using the communication date/time between pieces of flow data, the determiner 222 may list the communication dates and times in order from the oldest one, calculate an average value of differences between the communication dates and times among pieces of data with close communication dates and times, determine whether the average value is a predetermined threshold (for example, one minute) or more, and may then determine that the detection result in the overlay network has been obtained as erroneous detection in a case where the average value is the predetermined threshold or more.

That is, for example, in a case where unauthorized communication with the Command and Control server (C2 server) is detected in the overlay network, the determiner 222 determines the inconsistency level among a plurality of pieces of flow data in the underlay network having the connection destination address same as that of the communication. In a case where the inconsistency is high, the determiner 222 determines the communication not as unauthorized communication with the C2 server but as erroneous detection.

The blocker 223 blocks the information regarding the unauthorized communication notification of which is provided by the notifier 122 as unauthorized communication in accordance with the inconsistency level determined by the determiner 222. For example, when the determiner 222 determines that the inconsistency level is less than a predetermined threshold, the blocker 223 determines that the information is not erroneous detection, and blocks the information regarding the unauthorized communication notification of which is provided by the notifier 122 as unauthorized communication.

For example, when the determiner 222 has determined that the inconsistency level is less than a predetermined threshold, the blocker 223 blocks the communication to the unauthorized communication destination by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

In addition, for example, when the determiner 222 determines that the inconsistency level is less than the predetermined threshold, the blocker 223 blocks communication from the unauthorized communication source by using the information regarding the unauthorized communication notification of which is provided by the notifier 122. For example, when the determiner 222 has determined that the inconsistency level is less than a predetermined threshold, the blocker 223 blocks the communication from the unauthorized communication terminal by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

In addition, for example, when the determiner 222 determines that the inconsistency level is less than the predetermined threshold, the blocker 223 blocks the communication from the NW including the unauthorized communication source by using the information regarding the unauthorized communication notification of which is provided by the notifier 122. For example, when the determiner 222 has determined that the inconsistency level is less than a predetermined threshold, the blocker 223 blocks the communication from the NW including the unauthorized communication terminal by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

When the inconsistency level is determined to be a predetermined threshold or more by the determiner 222, the deleter 224 notifies the upper NW device 100 of an instruction to delete the information related to the unauthorized communication used for the detection. For example, in a case where the determiner 222 determines not to take action, the deleter 224 notifies the upper NW device 100 of an instruction to delete the content of communication involving the lower NW device 200 and the cyberattack information, as the information related to the unauthorized communication used for detection.

Note that the information related to the unauthorized communication used for the erroneous detection deleted by the deleter 224 may be stored in the upper NW device 100 or an external device.

### [Outline of processing performed by information processing system]

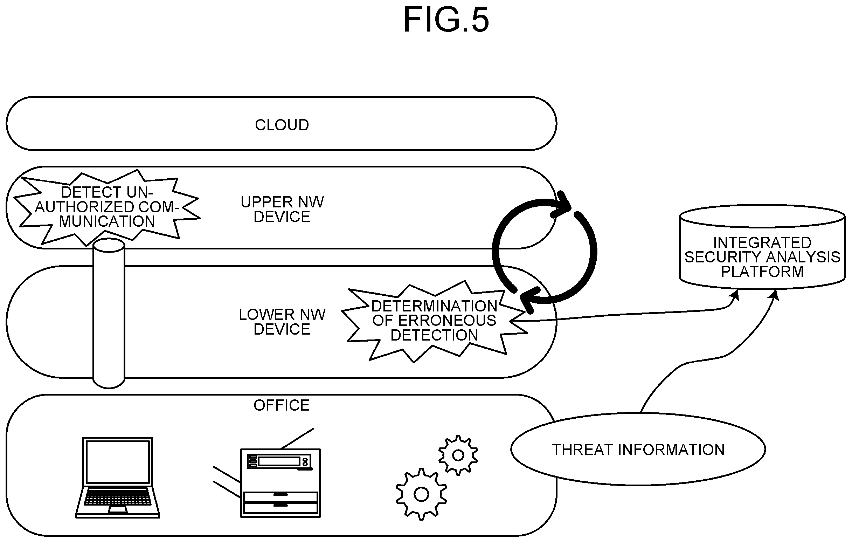

Next, an outline of processing performed by the information processing system 1 will be described with reference to FIG. 5. FIG. 5 is a diagram for illustrating an outline of processing performed by the information processing system 1.

First, the acquirer 221 of the lower NW device 200 acquires information related to communication of a terminal connected to the lower NW device 200. For example, the information related to communication of OA equipment, IoT equipment, or the like connected to the lower NW device 200 is acquired.

Subsequently, the detector 121 of the upper NW device 100 detects unauthorized communication.

Subsequently, the notifier 123 of the upper NW device 100 notifies the lower NW device 200 of information regarding unauthorized communication detected by the detector 121.

Subsequently, a determiner 222 determines whether the information related to the unauthorized communication notification of which is provided by the notifier 122 corresponds to the information related to the unauthorized communication used for determination of erroneous detection.

In a case where the determiner 222 has determined to take action, the blocker 223 blocks communication of a terminal that performs unauthorized communication based on the information regarding unauthorized communication notification of which is provided by the notifier 122.

In contrast, when the determiner 222 determines not to take action, the deleter 224, when the determiner 222 determines not to take action, the deleter 224 notifies the upper NW device 100 of an instruction to delete the information related to the unauthorized communication.

In this manner, the information processing system 1 allows the upper NW device 100 and the lower NW device 200 to closely cooperate with each other to detect, determine, and block unauthorized communication.

### [Detection/determination processing performed by information processing system]

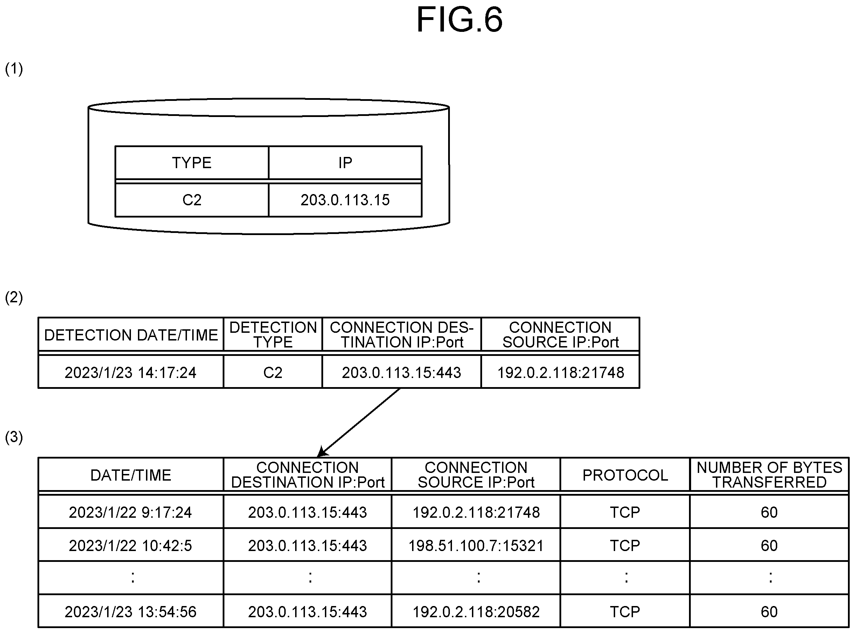

Next, detection processing and determination processing performed by the information processing system 1 will be described with reference to FIG. 6. FIG. 6 is a diagram for illustrating detection processing and determination processing performed by the information processing system 1.

FIG. 6(1) illustrates information related to unauthorized communication used for detection, such as a type of an unauthorized communication destination and an IP address. The information related to the unauthorized communication used for the detection may be stored in the cloud proxy of the upper NW device 100 or the storage module 130 of the upper NW device 100.

The detector 121 of the upper NW device 100 detects unauthorized communication as illustrated in FIG. 6(2) by using information such as the type of unauthorized communication destination and the IP address stored in the cloud proxy. FIG. 6(2) illustrates an example of information regarding communication detected as unauthorized communication by the detector 121.

Subsequently, the determiner 222 of the lower NW device 200 determines an inconsistency level among a plurality of pieces of flow data in the underlay network having the same connection destination address as the information regarding the unauthorized communication notification of which is provided by the notifier 122. FIG. 6(3) illustrates a plurality of pieces of flow data in the underlay network, having the same connection destination address as the information regarding the unauthorized communication notification of which is provided by the notifier 122.

For example, the determiner 222 calculates an inconsistency level among a plurality of pieces of flow data in the underlay network in which the connection destination address is the same as that of the information regarding the unauthorized communication notification of which is provided by the notifier 122, and then determines whether the inconsistency level is a predetermined threshold or more. When the inconsistency level is the predetermined threshold or more, the determiner 222 determines that the information is obtained as erroneous detection.

For example, in a case where the inconsistency level is calculated based on the connection destination port number, the communication protocol, and the number of bytes transferred, the determiner 222 determines, for all the acquired flow data, whether a ratio of the number of records in which no total matching is achieved, among the number of all records, in the connection destination port number, the communication protocol, and the number of bytes transferred, is a predetermined threshold (for example, 50%) or more. In a case where the ratio is the predetermined threshold or more, the determiner 222 determines that the detection result in the overlay network is erroneous detection.

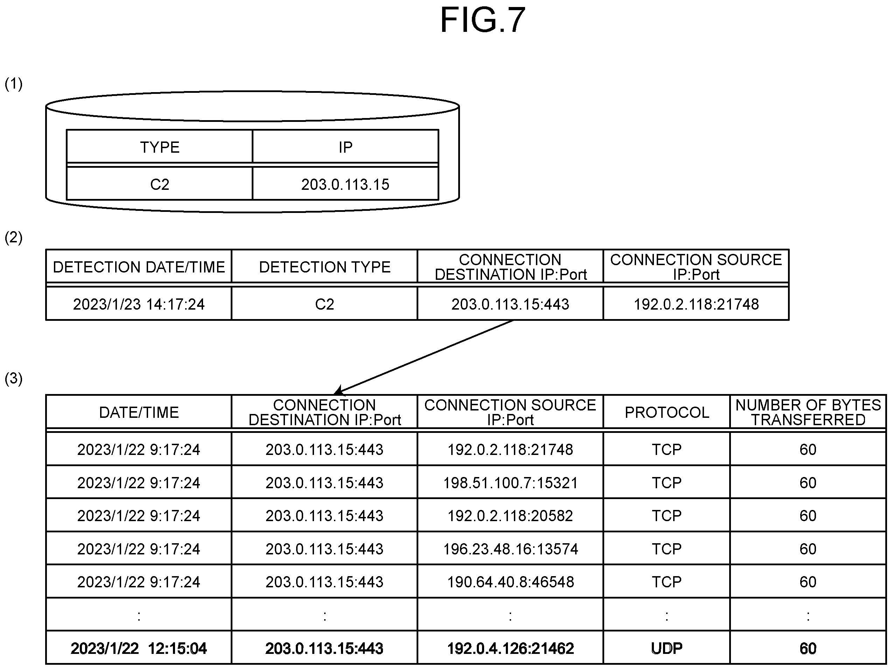

For example, in the example of FIG. 7, among the ten pieces of flow data, there is one record in which no total matching is achieved in the connection destination port number, the communication protocol, and the number of bytes transferred, indicating that ratio is about "10%". Accordingly, the determiner 222 determines that the inconsistency level is less than the predetermined threshold "50%". That is, the determiner 222 determines that the inconsistency is not high, and determines that the detection result in the overlay network is not erroneous detection. In this case, the blocker 223 blocks the unauthorized communication based on the information regarding unauthorized communication notification of which is provided by the notifier 122.

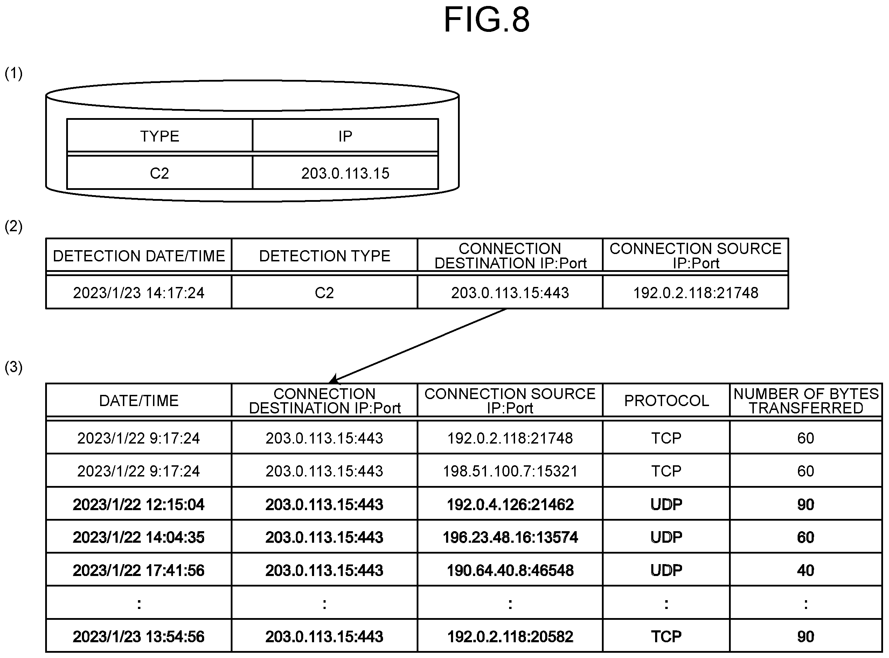

In addition, for example, in the example of FIG. 8, among the 10 pieces of flow data, there are eight records in which no total matching is achieved in the connection destination port number, the communication protocol, and the number of bytes transferred, indicating that the ratio is about "80%". Accordingly, the determiner 222 determines that the inconsistency level is the predetermined threshold "50%" or more. That is, the determiner 222 determines that the inconsistency is high, and determines that the detection result in the overlay network is erroneous detection. In this case, the deleter 224 notifies the upper NW device 100 to delete the information (FIG. 8(1)) about the unauthorized communication used for the detection.

### [Blocking processing performed by information processing system]

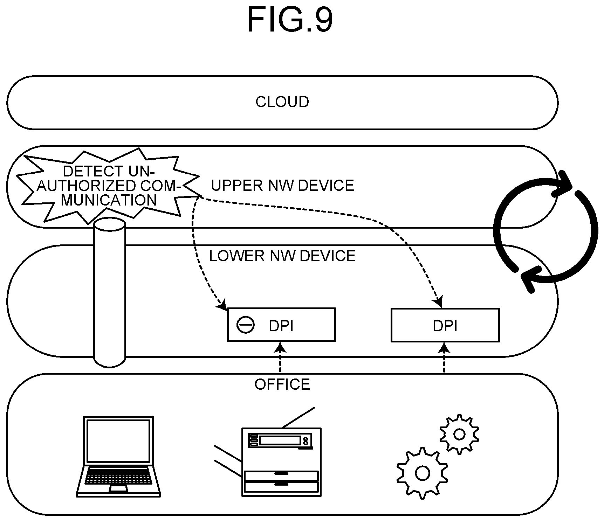

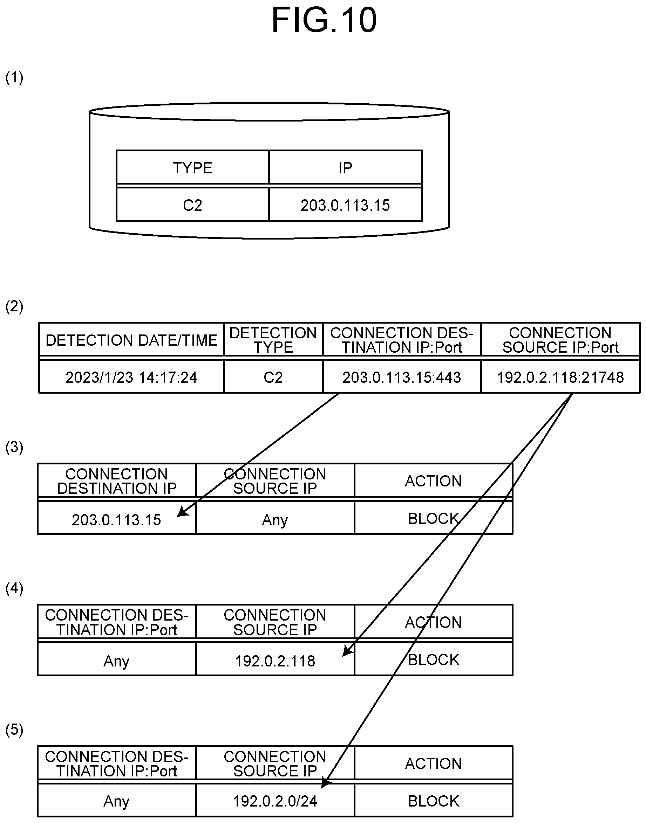

Next, blocking processing performed by the information processing system 1 will be described with reference to FIGS. 9 and 10. FIGS. 9 and 10 are diagrams for illustrating the blocking processing performed by the information processing system 1.

As illustrated in FIG. 9, the blocker 223 of the lower NW device 200 uses detection information regarding unauthorized communication to block the unauthorized communication by using the DPI.

Similarly to FIG. 6(1), FIG. 10(1) illustrates information related to unauthorized communication used for detection, such as the type of unauthorized communication destination and the IP address. Similarly to FIG. 6(2), FIG. 10(2) illustrates information regarding detected unauthorized communication.

As illustrated in FIG. 10(3), using the detection information of the unauthorized communication destination (connection destination IP address/port of the unauthorized communication), the blocker 223 of the lower NW device 200 blocks, by using the DPI, the communication with the unauthorized communication destination. This allows the information processing system 1 to block the communication with an unauthorized communication destination at an early stage.

That is, referring to the example in FIG. 10(3), the blocker 223 blocks the communication in which there is a match between the IP address "203.0.113.15" of the connection destination transmitted from the upper NW device 100 and the IP address of the connection destination.

Moreover, as illustrated in FIG. 10(4), using the detection information of the unauthorized communication destination (connection source IP address/port of the unauthorized communication), the blocker 223 of the lower NW device 200 blocks, by using the DPI, the communication from the terminal performing unauthorized communication. This allows the information processing system 1 to block an infected terminal and prevents the spread of infection.

That is, referring to the example in FIG. 10(4), the blocker 223 blocks the communication in which there is a match between the connection source IP address "192.0.2.118" transmitted from an upper NW device 100 and the connection source IP address.

Moreover, as illustrated in FIG. 10(5), using the detection information of the unauthorized communication destination (connection source IP address/port of the unauthorized communication), the blocker 223 of the lower NW device 200 blocks, by using the DPI, the communication from the NW including the terminal performing unauthorized communication. This allows the information processing system 1 to block the NW to which the infected terminal belongs and prevents the spread of infection.

That is, referring to the example in FIG. 10(5), the notifier 122 converts the connection source IP address "192.0.2.118" transmitted from the upper NW device 100 into an IP address "192.0.2.0/24" masked with a subnet mask, and notifies the lower NW device 200 of the connection source IP address "192.0.2.0/24". Accordingly, the blocker 223 blocks communication whose connection source IP address corresponds to "192.0.2.0/24", thereby blocking not only the infected terminal but also the NW to which the infected terminal belongs.

In this manner, the information processing system 1 allows the upper NW device 100 and the lower NW device 200 to cooperate with each other to detect unauthorized communication and block each communication related to a terminal that performs unauthorized communication.

### [Flowchart]

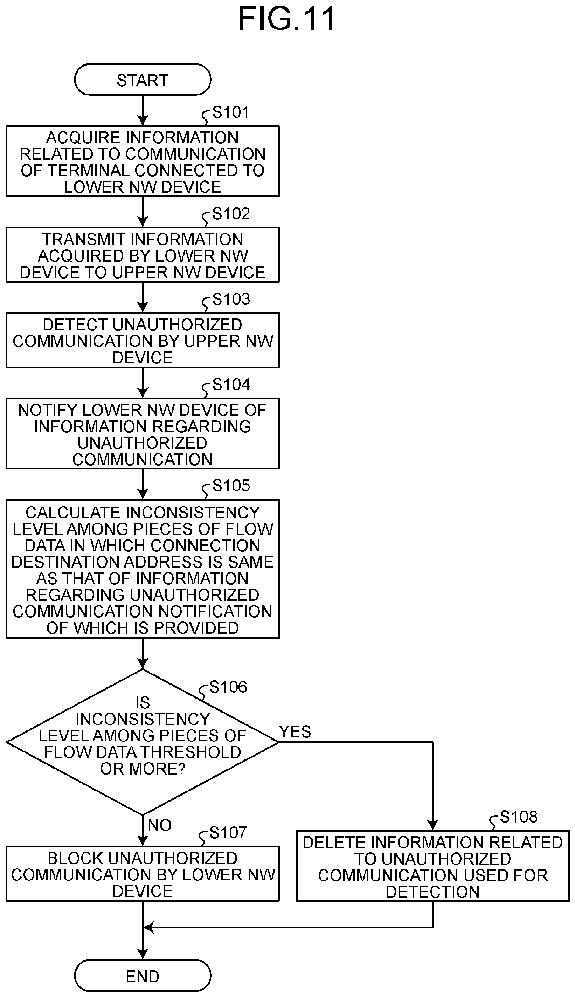

Next, a flow of processing performed by the information processing system 1 will be described with reference to FIG. 11. Note that the following steps can be executed in different orders, and may include processing to be omitted.

First, the acquirer 221 of the lower NW device 200 acquires information related to communication of a terminal connected to the lower NW device 200 (Step S101). For example, the acquirer 221 acquires information related to communication of OA equipment or IoT equipment connected to the lower NW device 200.

The information acquired by the acquirer 221 of the lower NW device 200 is transmitted to the upper NW device 100 (Step S102). Subsequently, the detector 121 of the upper NW device 100 detects unauthorized communication (Step S103). For example, the detector 121 detects unauthorized communication by the security function.

Subsequently, the notifier 122 of the upper NW device 100 notifies the lower NW device 200 of information regarding unauthorized communication detected by the detector 121 (Step S104). For example, as information regarding unauthorized communication detected by the detector 121, the notifier 122 notifies the lower NW device 200 of information such as a detection date/time, a detection type, a connection destination IP address/port, and a connection source IP address/port of the unauthorized communication.

Subsequently, the determiner 222 of the lower NW device 200 determines an inconsistency level among pieces of flow data having the same connection destination address as the information regarding the unauthorized communication notification of which is provided by the notifier 122 (Step S105). For example, the determiner 222 calculates the inconsistency level based on any one or a plurality of the communication date/time, the connection destination port number, the communication protocol, and the number of bytes transferred between the pieces of flow data having the same connection destination address as the information regarding the unauthorized communication notification of which is provided by the notifier 122.

Subsequently, the determiner 222 of the lower NW device 200 determines whether the calculated inconsistency level is a predetermined threshold or more (Step S106). Here, when the determiner 222 determines that the value is not the predetermined threshold or more (Step S106 "NO"), the blocker 223 of the lower NW device 200 blocks the unauthorized communication based on the information regarding the unauthorized communication notification of which is provided by the notifier 122 (Step S107). For example, the blocker 223 blocks the communication of the unauthorized communication to the communication destination using the information regarding the unauthorized communication notification of which is provided by the notifier 122.

In contrast, when the determiner 222 determines that the value is less than the predetermined threshold (Step S106 "YES"), the deleter 224 of the lower NW device 200 provides notification of deletion of the information related to the unauthorized communication used for detection (Step S108). For example, in a case where the determiner 222 determines not to take action, the deleter 224 notifies the upper NW device 100 of an instruction to delete the content of communication involving the lower NW device 200 and the cyberattack information, as the information related to the unauthorized communication used for detection.

### [Effects]

The information processing system 1 according to the embodiment is an information processing system including: the upper NW device 100 being a device constituting an overlay network; and the lower NW device 200 being a device constituting an underlay network. In this system, the upper NW device 100 includes: the detector 121 that detects unauthorized communication; and the notifier 122 that notifies the lower NW device 200 of information related to the unauthorized communication detected by the detector 121. The lower NW device 200 includes: the acquirer 221 that acquires information related to communication of a terminal connected to the lower NW device 200; the determiner 222 that determines an inconsistency level among a plurality of pieces of flow data in the underlay network having the same connection destination address as the information related to the unauthorized communication notification of which is provided by the notifier 122; and the blocker 223 that blocks information regarding unauthorized communication notification of which is provided by the notifier 122 as unauthorized communication in accordance with the inconsistency level determined by the determiner 222.

With this configuration of the information processing system 1, the upper NW device 100 detects unauthorized communication, the lower NW device 200 determines an inconsistency level, and the lower NW device 200 blocks communication in accordance with the inconsistency level, thereby achieving improvement in security and reduction in cost. Furthermore, in the information processing system 1, by separating the detection point and the blocking point, for example, even in a case where an attack by a large-scale botnet occurs and the communication of the C2 server of the botnet is detected by the upper NW device 100 and even in a case where the overlay network is not used, the communication can be blocked in a wide range by the underlay network, making it possible to suppress spread of damage.

In addition, with a configuration in which the information processing system 1 blocks communication from a terminal that performs unauthorized communication, communication is controlled in units of devices without blocking the entire NW, thereby achieving robust security while ensuring the availability of the NW.

In the information processing system 1 according to the embodiment, the determiner 222 in the lower NW device 200 calculates an inconsistency level among a plurality of pieces of flow data in the underlay network in which the connection destination address is the same as that of the information regarding the unauthorized communication notification of which is provided by the notifier 122, determines whether the inconsistency level is a predetermined threshold or more, determines that the detection is erroneous when the inconsistency level is the predetermined threshold or more. When the determiner 222 has determined that the inconsistency level is less than the predetermined threshold, the blocker 223 determines that the information is not erroneous detection and blocks the information regarding the unauthorized communication notification of which is provided by the notifier 122 as unauthorized communication.

With this configuration, the information processing system 1 confirms whether erroneous detection has occurred depending on whether the inconsistency level of the flow data having the same connection destination address as the information regarding the unauthorized communication detected by the upper NW device 100 exceeds the threshold, and then blocks the communication of the unauthorized communication to the communication destination, thereby achieving improvement in security and reduction in cost.

In the information processing system 1 according to the embodiment, the determiner 222 in the lower NW device 200 calculates the inconsistency level based on any one or a plurality of the communication date/time, the connection destination port number, the communication protocol, and the number of bytes transferred among pieces of flow data.

With this configuration, the information processing system 1 calculates the inconsistency level of the flow data having the same connection destination address as the information regarding the unauthorized communication detected by the upper NW device 100 based on the communication date/time, the connection destination port number, the communication protocol, and the number of bytes transferred among pieces of flow data, and blocks the communication of the unauthorized communication to the communication destination according to the inconsistency level, thereby achieving improvement in security and reduction in cost.

The lower NW device 200 of the information processing system 1 according to the embodiment further includes the deleter 224 that notifies the upper NW device 100 of deletion of information related to unauthorized communication used for detection in a case where the determiner 222 has determined that the inconsistency level is a predetermined threshold or more.

With this configuration, in a case where the inconsistency among pieces of flow data having the same connection destination address as that of the information related to the unauthorized communication detected by the upper NW device 100 is the threshold or more, the information processing system 1 determines that the information is erroneous detection and deletes the information related to the unauthorized communication used for detection, thereby achieving improvement in security and reduction in cost.

### [Program]

It is also possible to create a program in which the processing executed by the information processing system 1 in the above embodiment is described in a language executable by a computer. In this case, by execution of the program by the computer, effects similar to those of the above embodiment can be obtained. Furthermore, the program may be recorded in a computer-readable recording medium, and the program recorded in the recording medium may be read and executed by the computer to implement processing similar to the above-described embodiment.

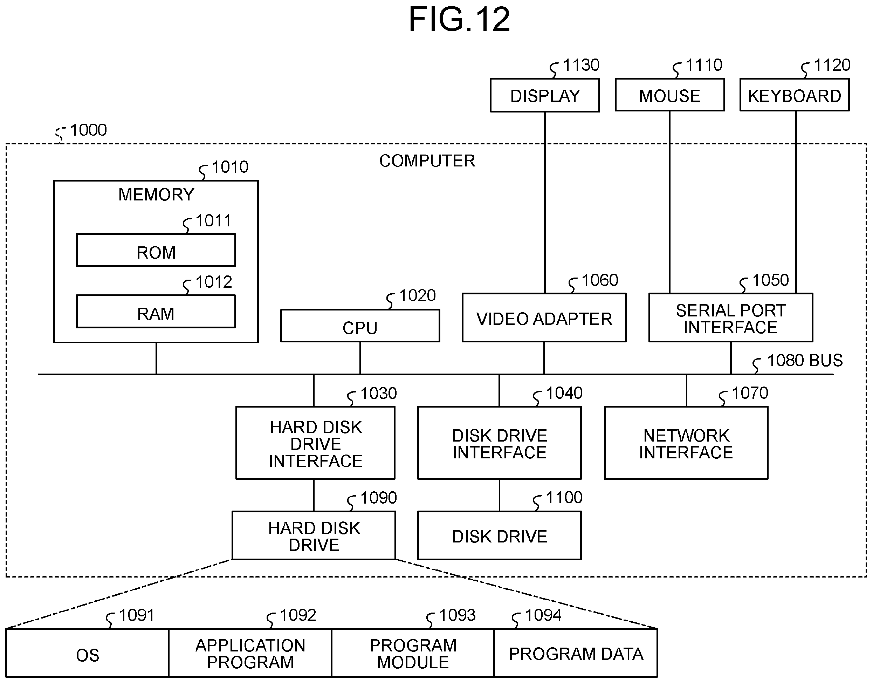

FIG. 12 is a diagram illustrating an example of a computer that executes an information processing program. As illustrated in FIG. 12, a computer 1000 includes, for example, memory 1010, a CPU1020, a hard disk drive interface 1030, a disk drive interface 1040, a serial port interface 1050, a video adapter 1060, and a network interface 1070. These units are connected to each other via a bus 1080.

The memory 1010 includes read only memory (ROM) 1011 and RAM 1012. The ROM 1011 stores, for example, a boot program such as a Basic Input Output System (BIOS). The hard disk drive interface 1030 is connected to a hard disk drive 1090. The disk drive interface 1040 is connected to a disk drive 1100. For example, the disk drive 1100 is a drive into which a removable storage medium such as a magnetic disk or an optical disk is inserted. For example, the serial port interface 1050 is connected to a mouse 1110 and a keyboard 1120. For example, the video adapter 1060 is connected to a display 1130.

Here, as illustrated in FIG. 12, the hard disk drive 1090 stores an operating system (OS) 1091, an application program 1092, a program module 1093, and program data 1094, for example. Each table described in the above embodiment is stored in the hard disk drive 1090 or the memory 1010, for example.

Furthermore, the information processing program is stored in the hard disk drive 1090 as, for example, a program module describing commands to be executed by the computer 1000. Specifically, the program module 1093 describing each processing to be executed by the computer 1000 described in the above embodiment is stored in the hard disk drive 1090.

Furthermore, data used for information processing performed by the information processing program is stored as program data in the hard disk drive 1090, for example. The CPU 1020 reads the program module 1093 and the program data 1094 stored in the hard disk drive 1090 to the RAM 1012 as necessary, and executes each procedure described above.

The program module 1093 and the program data 1094 related to the information processing program are not limited to the form of being stored in the hard disk drive 1090, and may be stored in a removable storage medium and read by the CPU 1020 via the disk drive 1100 or the like, for example. Alternatively, the program module 1093 and the program data 1094 related to the control program may be stored in another computer connected via a network such as a LAN or a Wide Area Network (WAN) and read by the CPU1020 via the network interface 1070.

### [Others]

Various embodiments, described herein in detail with reference to the drawings as a plurality of embodiments, are merely examples and are not intended to limit the present invention to the plurality of embodiments. The features described herein may be implemented by various methods, including various modifications and improvements based on the knowledge of those skilled in the art.

In addition, the "terms such as a part (a module or a noun with suffix -er or suffix -or)" described above can be read as a unit, a means, a circuit, or the like. For example, a communication module, a control module, and a storage module can be replaced with a communication unit, a control unit, and a storage unit, respectively.
Further preferred embodiments of the present invention are defined as E1 to E6 as follows:
E1. An information processing system comprising: an upper NW device being a device constituting an overlay network; and a lower NW device being a device constituting an underlay network,
   wherein the upper NW device includes:
   a detector configured to detect unauthorized communication; and
   a notifier configured to notify the lower NW device of information related to the unauthorized communication detected by the detector, and
   the lower NW device includes:
      an acquirer configured to acquire information related to communication of a terminal connected to the lower NW device;
      a determiner configured to determine an inconsistency level among a plurality of pieces of flow data in the underlay network having the same connection destination address as the information related to unauthorized communication notification of which is provided by the notifier; and
      a blocker configured to block the information related to unauthorized communication notification of which is provided by the notifier as unauthorized communication in accordance with the inconsistency level determined by the determiner.
E2. The information processing system according to embodiment E1,
   wherein the determiner calculates an inconsistency level among a plurality of pieces of flow data in the underlay network having the same connection destination address as the information related to the unauthorized communication notification of which is provided by the notifier, determines whether the inconsistency level is a predetermined threshold or more, and determines that the detection is erroneous when the inconsistency level is the predetermined threshold or more, and
   when the determiner has determined that the inconsistency level is less than the predetermined threshold, the blocker determines that the detection is not erroneous and blocks the information related to the unauthorized communication notification of which is provided by the notifier as unauthorized communication.
E3. The information processing system according to embodiment E2, wherein the determiner calculates the inconsistency level based on any one or a plurality of communication date/time, connection destination port number, a communication protocol, and number of bytes transferred, among the pieces of flow data.
E4. The information processing system according to embodiment E2, further including a deleter configured to notify the upper NW device of deletion of information related to unauthorized communication used for detection in a case where the determiner has determined that the inconsistency level is a predetermined threshold or more.
E5. An information processing method to be executed by an upper NW device being a device constituting an overlay network, and a lower NW device being a device constituting an underlay network, the information processing method comprising:
   an acquisition process of acquiring, by the lower NW device, information related to communication of a terminal connected to the lower NW device;
   a detection process of detecting, by the upper NW device, unauthorized communication;
   a notification process of notifying, by the upper NW device, the lower NW device of information related to the unauthorized communication detected by the detection process;
   a determination process of determining, by the lower NW device, an inconsistency level among a plurality of pieces of flow data in the underlay network having the same connection destination address as the information related to unauthorized communication notification of which is provided by the notification process; and
   a blocking process of blocking, by the lower NW device, the information related to the unauthorized communication notification of which is provided by the notification process as unauthorized communication in accordance with the inconsistency level determined by the determination process.
E6. An information processing program that causes a computer functioning as an upper NW device being a device constituting an overlay network, and a computer functioning as a lower NW device being a device constituting an underlay network, to execute following steps,
   the information processing program that causes the computer functioning as the upper NW device to execute:
   a detection step of detecting unauthorized communication; and
   a notification step of notifying the lower NW device of information related to the unauthorized communication detected by the detection step,
   the information processing program that causes the computer functioning as the lower NW device to execute:
      an acquisition step of acquiring information related to communication of a terminal connected to the lower NW device;
      a determination step of determining an inconsistency level among a plurality of pieces of flow data in the underlay network having the same connection destination address as the information related to unauthorized communication notification of which is provided by the notification step; and
      a blocking step of blocking the information related to unauthorized communication notification of which is provided by the notification step as unauthorized communication in accordance with the inconsistency level determined by the determination step.

### [Explanation of Reference]

- 1: INFORMATION PROCESSING SYSTEM
- 100: UPPER NW DEVICE
- 110: COMMUNICATION MODULE
- 120: CONTROL MODULE
- 121: DETECTOR
- 122: NOTIFIER
- 130: STORAGE MODULE
- 200: LOWER NW DEVICE
- 210: COMMUNICATION MODULE
- 220: CONTROL MODULE
- 221: ACQUIRER
- 222: DETERMINER
- 223: BLOCKER
- 224: DELETER
- 230: STORAGE MODULE

## Claims

1. An information processing system comprising: an upper NW device being a device constituting an overlay network; and a lower NW device being a device constituting an underlay network,
wherein the upper NW device includes:
a detector configured to detect unauthorized communication; and
a notifier configured to notify the lower NW device of information related to the unauthorized communication detected by the detector, and
the lower NW device includes:
a determiner configured to calculate an inconsistency level among a plurality of pieces of flow data in the underlay network having the same connection destination address as the information related to the unauthorized communication notification of which is provided by the notifier, determine whether the inconsistency level is a predetermined threshold or more, and determine that the detection is erroneous when the inconsistency level is the predetermined threshold or more; and
a blocker configured to determine that the detection is not erroneous and block the information related to the unauthorized communication notification of which is provided by the notifier as unauthorized communication by using information related to communication of a terminal connected to the lower NW device when the inconsistency level having been determined by the determiner is less than the predetermined threshold.

2. The information processing system according to claim 1, wherein the determiner calculates the inconsistency level based on any one or a plurality of communication date/time, connection destination port number, a communication protocol, and number of bytes transferred, among the pieces of flow data.

3. The information processing system according to claim 1, further including a deleter configured to notify the upper NW device of deletion of information related to unauthorized communication used for detection in a case where the determiner has determined that the inconsistency level is a predetermined threshold or more.

4. An information processing method to be executed by an upper NW device being a device constituting an overlay network, and a lower NW device being a device constituting an underlay network, the information processing method comprising:
a detection process of detecting, by the upper NW device, unauthorized communication;
a notification process of notifying, by the upper NW device, the lower NW device of information related to the unauthorized communication detected by the detection process;
a determination process of calculating, by the lower NW device, an inconsistency level among a plurality of pieces of flow data in the underlay network having the same connection destination address as the information related to the unauthorized communication notification of which is provided by the notification process, determining whether the inconsistency level is a predetermined threshold or more, and determining that the detection is erroneous when the inconsistency level is the predetermined threshold or more; and
a blocking process of determining, by the lower NW device, that the detection is not erroneous and blocking the information related to the unauthorized communication notification of which is provided by the notification process as unauthorized communication by using information related to communication of a terminal connected to the lower NW device when the inconsistency level having been determined by the determination process is less than the predetermined threshold.

5. An information processing program that causes a computer functioning as an upper NW device being a device constituting an overlay network, and a computer functioning as a lower NW device being a device constituting an underlay network, to execute following steps,
the information processing program that causes the computer functioning as the upper NW device to execute:
a detection step of detecting unauthorized communication; and
a notification step of notifying the lower NW device of information related to the unauthorized communication detected by the detection step,
the information processing program that causes the computer functioning as the lower NW device to execute:
a determination step of calculating an inconsistency level among a plurality of pieces of flow data in the underlay network having the same connection destination address as the information related to the unauthorized communication notification of which is provided by the notification step, determining whether the inconsistency level is a predetermined threshold or more, and determining that the detection is erroneous when the inconsistency level is the predetermined threshold or more; and
a blocking step of determining that the detection is not erroneous and blocking the information related to the unauthorized communication notification of which is provided by the notification step as unauthorized communication by using information related to communication of a terminal connected to the lower NW device when the inconsistency level having been determined by the determination step is less than the predetermined threshold.
